Europäisches Patentamt

European Patent Office

Office européen des brevets

(19)

(11) Veröffentlichungsnummer: **0 074 106**
**A1**

(12) **EUROPÄISCHE PATENTANMELDUNG**

(21) Anmeldenummer: **82108195.7**

(22) Anmeldetag: **06.09.82**

(51) Int. Cl.³: **B 23 K 9/28**

(30) Priorität: **09.09.81 DE 3135626**

(43) Veröffentlichungstag der Anmeldung:
**16.03.83 Patentblatt 83/11**

(84) Benannte Vertragsstaaten:
**AT BE CH FR GB IT LI NL SE**

(71) Anmelder: Alexander Binzel GmbH & Co. KG
Postfach 51 29
D-6300 Giessen(DE)

(72) Erfinder: Tammi, Vesa, Dipl.-Ing.
Am Lindenberg 18
D-6301 Fernwald 1(DE)

(72) Erfinder: Geus, Ewald
Auf der Pitz 2
D-6331 Blasbach(DE)

(72) Erfinder: Steiner, Günther
Eisenstrasse 7
D-6300 Giessen-Wieseck(DE)

(74) Vertreter: Sternagel, Hans-Günther et al,
Patentanwälte Dr. M. Hann Dr. H.-G. Sternagel
Marburger Strasse 38
D-6300 Giessen(DE)

(54) **Wassergekühlter Schutzgasschweissbrenner für automatische Schweissanlagen mit von innen ausblasbarer Gasdüse.**

(57) Gegenstand ist ein wassergekühlter Schutzgasschweiß brenner für das Schweißen mit unendlicher abschmelzen der Elektrode für automatische Schweißanlagen, der von innen heraus periodisch ausblasbar ist. Dies wird erreicht durch koaxiale Anordnung von zwei Außenprofilrohren 7, 10, die elektrisch voneinander isoliert sind und deren Nuten 8, 11 als Kanäle ausgebildet sind, die vom Brennerkopf mit der Gasdüse 1 auf einer Gasdüsenaufnahme 4 bis in einen Brennerkörper 13 reichen. Die innenliegenden Schutzgaska- näle 11 dienen gleichzeitig der Zufuhr der Ausblasluft in die Gasdüse 1 beim periodischen Reinigen der Gasdüse. Die außenliegenden Wasserkanäle 8 erstrecken sich bis in die Gasdüsenaufnahme 4, so daß diese direkt gekühlt ist. Durch eine besondere Ausgestaltung des Brennerkörpers 13 und des Anschlußteils 22 werden Schutzgas bzw. Preßluft zum Ausblasen und Kühlwasser den koaxial angeordneten Profil- rohren 7, 10 zugeführt.

Wassergekühlter Schutzgasschweißbrenner für automatische Schweißanlagen mit von innen ausblasbarer Gasdüse

---

Die Erfindung betrifft einen verbesserten schutzgasgekühlten Schweißbrenner für das Schweißen mit abschmelzender Elektrode, insbesondere einen Brenner für automatische Schweißanlagen, der sich periodisch durch Ausblasen reinigen läßt.

In der Schweißtechnik sind für die Schutzgasschweißung mit unendlicher abschmelzender Elektrode gekühlte Brenner für automatisch arbeitende Anlagen, sogenannte Roboterbrenner, bekannt. Derartige Brenner bedürfen von Zeit zu Zeit einer Reinigung der Gasdüse. Die Standzeiten zwischen den Reinigungszyklen hängt entscheidend davon ab, welche Temperatur der Brenner erreicht und ob bei hohen Temperaturen an der Gasdüse zwangsläufig auftretende Schweißspritzer sich dauerhaft haftend festsetzen können und durch Aufbauen schließlich den Schweißvorgang stören.

Aufgabe der Erfindung ist es, einen Schutzgasschweißbrenner zu schaffen, der als Roboterbrenner für automatisch arbeitende Schweißanlagen verwendbar, periodisch von innen her zentrisch ausblasbar ist und dessen Kühlung im Bereich der Gasdüse so verbessert ist, daß sich Spritzer nicht dauerhaft haftend festsetzen können, sondern ausblasbar bleiben.

Diese Aufgabe wird gelöst durch einen Schutzgasschweißbrenner für das Schweißen mit abschmelzender Elektrode, mit einer Gasdüse, einer am Ende des Außenrohres aufgesetzten Gasdüsenaufnahme, innerhalb eines dünnwandigen Außenrohres koaxial zueinander angeordneten stromführenden Brennerrohres und durch eine elektrisch isolierende Schicht voneinander getrennten inneren und äußeren Profilrohren mit längslaufenden Nuten, wobei am vorderen Ende des Brennerrohres eine Stromdüse und am anderen Ende ein Brennerkörper, an die sich das Schlauchpaket anschließt, angeordnet sind, wobei das äußere Profilrohr sich bis weit in die Gasdüsenaufnahme erstreckt und seine als Kühlwasserkanäle dienenden Längsnuten an ihren Enden in der Gasdüsenaufnahme durch eine Ringnut miteinander verbunden sind, die Nuten des inneren Profilrohres am vorderen Ende vor der Stromdüse offen enden und am anderen Ende innerhalb des Brennerkörpers in einem Ringraum münden, innerhalb des Brennerkörpers eine erste Bohrung vorhanden ist, die zwischen einer Gruppe der Kühlwasserkanäle und einem Kühlwasseranschluß eine Verbindung herstellt, eine zweite Bohrung vorhanden ist, die mit der anderen Gruppe von Wasserkanälen Verbindung zum Kühlwasseraustritt herstellt und eine dritte Bohrung einen Gas-Luftanschluß mit dem Ringraum am Ende der Nuten des inneren Profilrohres verbindet. Der Schutzgasschweißbrenner ist dadurch gekennzeichnet, daß a) an der Gasdüsenaufnahme 4 ein Spritzerschutz 2 innerhalb der Gasdüse 1 angeordnet ist, in dessen Bereich die längslaufenden

- 3 - 0074106

Nuten 11 des inneren Profilrohres 10 so enden, daß Gas radial aus den Nuten austritt und an die Innenwand der Gasdüse 1 mit dem Spritzerschutz 2 gelangt, b) in der Nähe des Gas-Luftanschlusses 16 des Brennerkörpers 13 eine Verzweigung für einen Pressluftanschluß vorhanden und in der Schutzgasleitung ein selbsttätig wirkendes Rückschlagventil 18 vorhanden ist.

In den Unteransprüchen sind bevorzugte Ausführungsformen der Erfindung beschrieben.

Der erfindungsgemäße Schutzgasschweißbrenner ist ein sogenannter Roboterbrenner mit Ausblasvorrichtung zur Reinigung der Gasdüse, ohne diese dazu abnehmen zu müssen. Die periodisch notwendige Reinigung erfolgt dadurch, daß die Gasdüse von innen aus mit Luft ausgeblasen wird. Der Luft bzw. Preßluft wird vorzugsweise ein Trennmittel beigefügt, um ein dauerhaftes Anhaften von Spritzern an der Gasdüse zu vermeiden. Dadurch können sich doch ansetzende Spritzer durch einfaches Ausblasen mit einem kräftigen Luftstoß wieder entfernt werden, ohne daß die Gasdüse abgenommen und mechanisch gereinigt werden muß. Um diese Wirkung möglichst dauerhaft zu erzielen, kommt es entscheidend darauf an, daß einerseits die Gasdüse und der Brenner in diesem Bereich gut gekühlt werden, um ein Einbrennen von Schmutzpartikeln und Spritzern zu vermeiden, andererseits aber auch ausreichend Luft zum Ausblasen von innen heraus zur Verfügung zu haben.

Dies wird dadurch erreicht, daß der Brenner eine direkt gekühlte Gasdüse aufweist, indem die Gasdüsenaufnahme mit Wasser gekühlt wird und durch ein profiliertes Innenrohr zusätzlich eine direkte Gaskühlung durch das Schutzgas erfolgt. Durch die relativ gute Wärmeleitfähigkeit der Isolierschicht wird der Innenbereich indirekt auch noch durch die Kühlflüssigkeit im äußeren Profilrohr gekühlt.

Durch das Schlauchpaket werden dem Brenner gemeinsam Strom, Wasser und Schutzgas, /Ausblasluft sowie die Elektrode zugeführt. Im Bereich des Brennerkörpers erfolgt bei der erfindungsgemäßen konstruktiven Gestaltung eine Aufteilung der zugeführten Materialien. Im Inneren eines Außenprofilrohres werden der Schweißdraht und die Schweißdrahtspirale bis zur Stromdüse am Ende dieses Rohres geführt. Die längs laufenden Nuten des Außenprofilrohres dieses inneren Brennerrohres dienen als Kanäle für das Schutzgas, um dieses in die Gasdüse gelangen zu lassen. Die Gaskanäle dienen während der Reinigungsphase des Brenners,durch Ausblasen, zur Führung der Preßluft. Die Nuten beginnen im Brennerkörper und reichen bis vor die am Ende des Profilrohres aufgesetzte Stromdüsenaufnahme mit der Stromdüse. Dieses Ende liegt im Bereich der Gasdüse mit einem innen angeordneten Spritzerschutz. Dies ermöglicht einen gleichmäßigen Schutzgasaustritt bzw. Austritt der Ausblasluft, um die Brennerlängsachse. Das Gas oder die Preßluft tritt zunächst radial aus den Nuten aus und gelangt so an die Innenwand der Gasdüse mit dem Spritzerschutz. Der Gasstrom wird an dieser Wand umgelenkt und tritt in Richtung der Längsachse aus der Gasdüse aus. Diese Umlenkung des Gasstromes gibt einen guten Ausblaseffekt, zumal beispielsweise 6 Kanäle (Nuten) einen ausreichenden Querschnitt für einen starken Preßluftstrom darstellen.

Dieser stromführende Innenteil des Brenners ist elektrisch isoliert gegen die äußeren Teile. Beginnend im Brennerkörper längs des Innenrohres bis vor die offenen Enden der Nuten im Bereich des Brennerkopfes wird das innere Profilrohr von einem dünnwandigen Isolierrohr, beispielsweise aus Polytetrafluorethylen umschlossen. Das Isoliermaterial sollte jedoch ein relativ gut wärmeleitendes Material sein, um auch noch einen ausreichenden Wärmeübergang in den wassergekühlten Bereich zu ermöglichen. Das mit einem Außenprofil versehene Innenrohr kann auch aus einem Material bestehen, das mit Hilfe einer anodischen Oxidation oberflächlich mit einer elektrisch isolierenden Schicht versehen wurde, die jedoch relativ gut wärmeleitend ist. Ein derartiges Material ist beispielsweise Aluminium oder Aluminiumlegierungen.

Dieser nach außen elektrisch isolierte Innenteil des Brenners ist in einem äußeren Profilrohr, ebenfalls mit Außenprofil angeordnet. Die Längsnuten des äußeren Profilrohres beginnen ebenfalls im Brennerkörper und werden außen vom Außenrohr des Brenners abgedeckt. Am Brennerkopf schließt sich an das Außenrohr die Gasdüsenaufnahme an. Das äußere Profilrohr reicht mit den Nuten bis in einen Teil der Gasdüsenaufnahme. Im Bereich der Gasdüsenaufnahme werden die längs verlaufenden Nuten durch eine Ringnut miteinander verbunden, um Vor- und Rücklaufkanäle für das Kühlwasser zu schaffen. Die auf diese Weise gebildeten Kühlwasserkanäle sind die von dem Außenrohr umschlossenen Längsnuten des äußeren Profilrohres.

Dieser Umtausch der Kühlung, daß im Inneren des Brenners eine direkte Gaskühlung, im äußeren Mantel noch eine direkte Flüssigkeitskühlung, beispielsweise Wasserkühlung der Gasdüsenaufnahme und damit direkt auch der Gasdüse erfolgt, gibt insgesamt einen besseren Kühleffekt und ermöglicht eine kompakte Ausführung des Brennerkopfes mit geringer Gesamtmasse. Die erfindungsgemäße Ausbildung des Brennerkopfes ist ein sensibler Roboterkopf, der sehr wenig Masse aufweist, trotz kompakter Bauweise hohe Strombelastungen zuläßt, so daß er insgesamt im Rahmen einer Schweißmaschine auch besser einstellbar ist.

Diese konstruktive Ausbildung hat weiterhin den Vorteil, daß kein zusätzlicher Kanal für die Führung der Ausblasluft erforderlich ist, sondern daß Luft und Schutzgas lediglich bis zum Brennerkörper oder kurz davor getrennt geführt werden müssen. Im Schlauchpaket wird das Schutzgas durch einen getrennten Schlauch bis an das Rückschlagventil geführt. Die Zusammenführung der Schutzgasleitung und der Preßluftleitung im Bereich des Brennerkörpers oder unmittelbar davor erfolgt über ein Leitungs-T-Stück mit einem üblichen selbsttätigen Rückschlagventil in der Schutzgasleitung. Sobald ein Preßluftstoß durch Preßluftleitung auftritt, schließt sich das Rückschlagventil in der Schutzgasleitung und vermeidet in diesem Bereich das Mischen von Schutzgas und Luft.

Der Brennerkörper ist so ausgebildet, daß auf der einen Seite das Schlauchpaket anschließt und an der entgegengesetzten Seite der eigentliche Brenner. Im Achszentrum verläuft eine Längsbohrung zur Durchführung der Elektrode und der Drahtführspirale. Das innere Profilrohr endet im Brennerkörper und die Nuten sind zu einem Ringraum verbunden, der über eine Bohrung mit dem Schutzgas/Luftanschlußstutzen an der hinteren Stirnseite des Brennerkörpers verbunden ist.

An der hinteren Stirnseite des Brennerkörpers sind ferner Kühlwassereinlaß- und -auslaßstutzen vorhanden, die über Bohrungen mit den Nuten des äußeren Profilrohres in Verbindung stehen, so daß ein System von Kühlwasserkanälen mit Vor- und Rückführung der Kühlflüssigkeit ausgebildet ist. Die Stromzuführung erfolgt über den Kühlwasseranschluß. Durch eine elektrische Isolierung des Anschlußstückes gegenüber dem Brennerkörper ist sichergestellt, daß keine außenliegenden Teile des Brenners stromführend werden können.

Nach einer besonderen Ausführungsform ist die außen auf die Gasdüsenaufnahme aufgesetzte Gasdüse durch einen aufschraubbaren Spannring gesichert. Dies ist erforderlich um sicherstellen, daß die Gasdüse ausreichend festsitzt und bei Ausblasen nicht abfällt und ferner auch bei mechanischer Reinigung von außen, beispielsweise Auskratzen der Gasdüse ihren Sitz beibehält. Andererseits soll sie jedoch mit geringem Aufwand austauschbar sein, denn bei der Gasdüse handelt es sich um ein Verschleißteil mit begrenzter Standzeit, die jedoch durch die erfindungsgemäße konstruktive Ausbildung gegenüber bekannten Brennern verlängert ist.

Für das Ausblasen ist es wesentlich, daß ein entsprechender Querschnitt für die Ausblasluft zur Verfügung steht, so daß die benötigte Menge Preßluft ohne hohen Druckabfall innerhalb des Brenners in die Gasdüse in ausreichender Menge gelangt. Der Innendurchmesser des Anschlußstutzens 14 ist deshalb 5 mm. Die Gaskanäle 11 haben zusammen einen Querschnitt von etwa 20 $mm^2$. Dies entspricht etwa dem Querschnitt des Anschlußstutzens.

Diese Querschnitte gelten als bevorzugt und sollten nach Möglichkeit nur geringfügig unterschritten werden. Größere Querschnitte, beispielsweise bis 25 $mm^2$ oder 30 $mm^2$, sind ebenfalls möglich.

Die Erfindung wird nun anhand der Abbildungen noch näher beschrieben.

Abbildungen 1 und 2 zeigen jeweils einen Längsschnitt durch den erfindungsgemäßen Schutzgasschweißbrenner.

Abbildung 3 ist ein Querschnitt durch den Brenner entlang der Linie C - D von Abbildung 2.

Abbildung 4 zeigt einen Längsschnitt durch die Zusammenführung von Schutzgas und Ausblasluft mit einem üblichen selbsttätigen Rückschlagventil.

Abbildung 5 ist ein Schnitt entlang der Linie A - B von Abbildung 2.

Abbildung 6 ist eine Teilansicht eines Längsschnittes des Anschlußteils und Brennerkörpers als Ansicht X aus Abbildung 7.

Abbildung 7 ist eine Ansicht von Y aus auf das Anschlußteil der Abbildung 2.

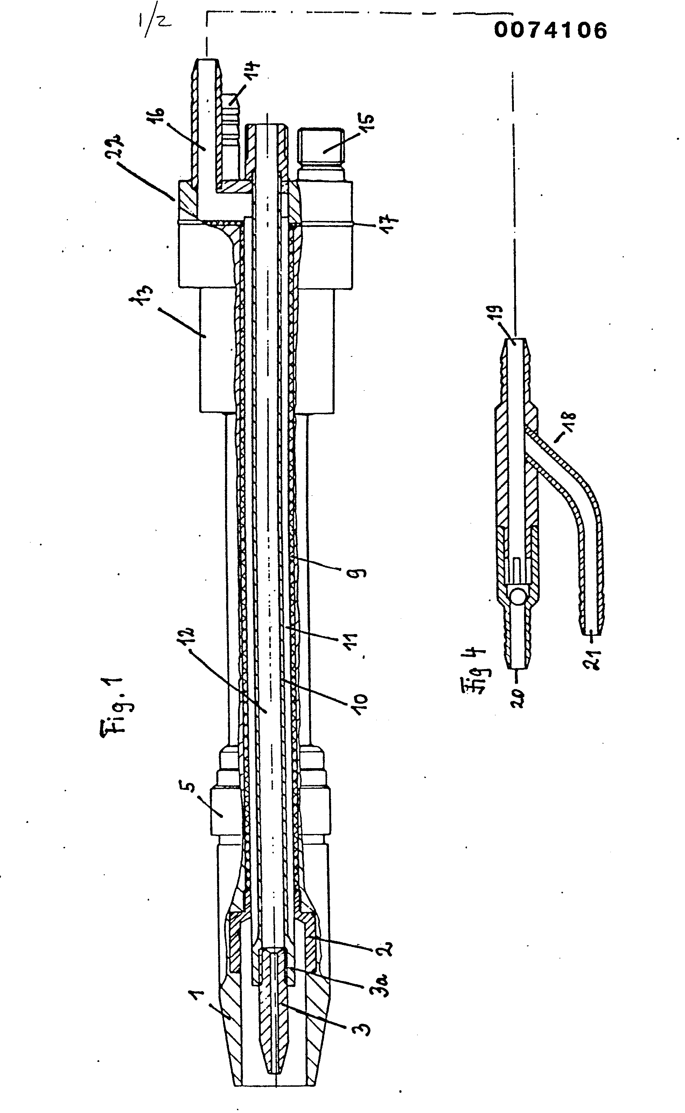

Der in Abbildung 1 wiedergegebene Schutzgasschweißbrenner weist eine Gasdüse 1 mit einem innen liegenden Spritzerschutz 2 auf. Zentrisch auf der Längsachse befindet sich innerhalb der Gasdüse 1 die Stromdüse 3, die über eine Stromdüsenaufnahme 3a auf das Ende des innen Profilrohres oder Brennerrohres 10 aufgesetzt ist. Die Gasdüse 1 wird auf der Gasdüsenaufnahme 4 durch den aufschraubbaren Spannring 5 gehalten und gegen unerwünschtes Abfallen gesichert. Im Zentrum des Brenners von der Stromdüsenaufnahme 3a ausgehend bis in den Brennerkörper 13 verläuft ein inneres Profilrohr 10, in dessen Innenraum 12 die Elektrode und die Drahtführspirale durch den Brenner geführt werden. Das innere Profilrohr 10 ist ein Rohr mit Außenprofilen, d.h. längs laufenden Nuten 11, das von der Isolierung 9 umschlossen ist. Koaxial um das isolierte Innenrohr 10 ist das äußere Profilrohr 7 angeordnet, das seinerseits wieder vom Außenrohr 6 umschlossen ist. Dieses koaxiale Profilrohrsystem erstreckt sich bis in den Brennerkörper 13. Der Brennerkörper 13 ist zylinderförmig mit Stufen ausgebildet und weist an der hinteren Stirnseite eine elektrisch isolierende Dichtung 17 auf, zwischen dem Anschlußteil 22 für das Schlauchpaket und dem eigentlichen Brennerkörper. Die Nuten 11 des inneren Profilrohres enden im Anschlußteil des Brennerkörpers in einem Ringraum, der mit dem Inneren des Anschlußstutzens 16 in Verbindung steht. Mit 14 und 15 sind die Kühlwasseranschlüsse bezeichnet.

In Figur 2 ist die Anordnung der Gasdüse 1 mit dem aufschraubbaren Spannring 5 auf der Gasdüsenaufnahme 4 detaillierter wiedergegeben. Es ist gezeigt, wie die Gasdüsenaufnahme 4 auf das Außenrohr 6 aufgesetzt ist und daß das äußere Profilrohr 7 mit den Nuten 8 sich bis in die Gasdüsenaufnahme 4 erstreckt.

Im Brennerkörper 13 ist in dieser Abbildung 2 die Ausbildung der Kühlflüssigkeitszu- und -abführung über die Stutzen 14 und 15 zu erkennen, die über entsprechend angelegte Bohrungen 23, 24 durch den Brennerkörper 13 die Verbindung mit den Nuten 8 des äußeren Profilrohres 7 herstellen. Zwischen dem Brennerkörper 13 und dem Anschlußteil 22 ist die elektrisch isolierende Dichtung 17 angeordnet. Um jeden elektrischen Kontakt zwischen dem Anschlußteil 22 und dem äußeren Profilrohr 7 mit Sicherheit auszuschließen, sind im Bereich des Überganges Brennerkörper/ Anschlußteil 13/22 isolierende Buchsen 25 in den wasserführenden Bohrungen angeordnet. Diese Buchsen oder Distanzstücke 25 sind vorzugsweise 10 mm lang. Dies hat den Vorteil, daß an dieser Stelle im Brennerkörper/ Anschlußteil auch galvanischer Abrieb infolge elektrischer Potentiale mit Sicherheit vermieden wird. Das Anschlußteil 22 ist mittels nicht gezeigter Schrauben am Brennerkörper 13 befestigt.

Aus Abbildung 3 ist die Anordnung der beiden Profilrohre zueinander am besten zu entnehmen. Das innere Profilrohr 10, in dessen Innenraum 12 die Drahtführspirale mit dem Schweißdraht geführt ist, weist auf der Außenseite Nuten 11 auf, die als Luft-Gaskanäle dienen. Das Profilrohr 10 ist von der Isolierschicht 9 umgeben. Daran schließt sich koaxial das äußere Profilrohr 7 mit den Längsnuten 8 an und das Ganze ist vom Außenrohr 6 umschlossen. Auf diese Weise entsteht ein gegeneinander isoliertes Kanalsystem für die Gas/Luftführung im zentralen Teil des Brenners und das flüssigkeitsgekühlte Kanalsystem außen darum herum.

Die in Figur 3 wiedergegebene Ausführungsform weist sechs Luft-Gaskanäle 11 auf und insgesamt acht Wasserkanäle 8, von denen vier der Kühlwasserzufuhr und die anderen vier der Kühlwasserrückleitung dienen, so daß die Gasdüsenaufnahme 4 direkt mit Flüssigkeit, beispielsweise Wasser, gekühlt werden kann und ein ausreichender Querschnitt zur Verfügung steht, um eine besonders intensive Kühlung zu ermöglichen.

Figur 4 zeigt einen Längsschnitt durch die Zusammenführung des Schutzgases und der Preßluft mit dem Rückschlagventil am Ende des Schlauchpaketes vor dem eigentlichen Brennerkörper. Mit 19 ist der Brenneranschluß bezeichnet, 20 ist der Anschluß für die Schutzgasleitung und mit 21 ist der Preßluftanschluß bezeichnet. Die in dem Schutzgasanschluß 20 angeordnete Kugel mit entsprechenden Haltevorrichtungen dient als übliches selbsttätig wirkendes Rückschlagventil und blockiert bei Druckbelastung aus dem Bereich der Zufuhrleitung 21 die Schutzgasleitung 20. Diese Ausführungsform der Zusammenführung von Schutzgasstrom und Ausblasluft ist nur ein Ausführungsbeispiel und kann unter Beibehaltung des Prinzips der Zusammenführung und der Einschaltung eines üblichen Rückschlagventiles auch konstruktiv verändert ausgebildet sein. Die Zusammenführung von Luft und Schutzgas erfolgt vorzugsweise am Ende des Schlauchpaketes unmittelbar vor dem Brennerkörper.

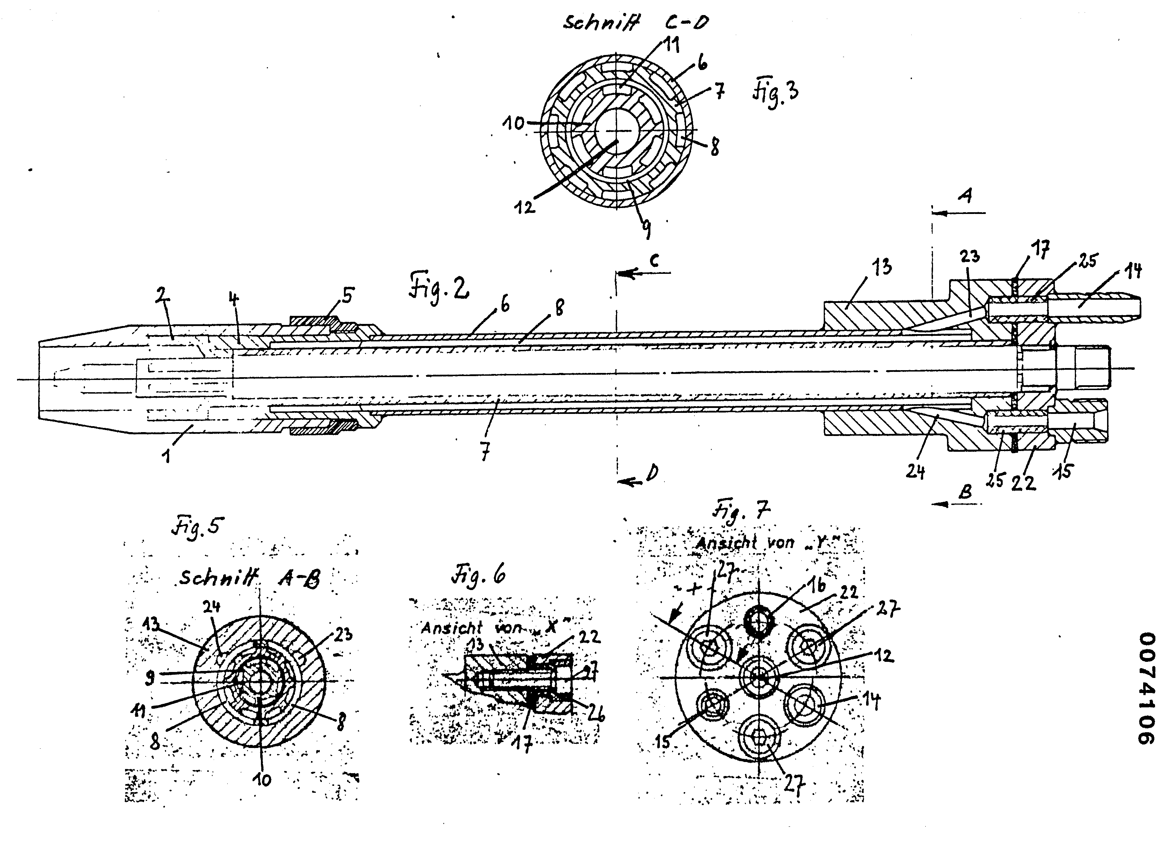

Figur 5 ist ein Schnitt entlang der Linie A - B von Figur 2 und zeigt den Verlauf der Bohrungen 23, 24 innerhalb des Brennerkörpers 13 zum Anschluß an die Wasserkanäle 8. Am Ende des äußeren Profilrohres 7 sind auf einer kurzen Strecke die Stege zwischen den Nuten 8 bis auf zwei entfernt, so daß 2 voneinander getrennte jeweils halbkreisförmige Verbindungsräume der einzelnen Nuten ausgebildet sind, in die jeweils eine der Bohrungen 23, 24 mündet. Dadurch werden Wasser-Zufuhr und -Abführung voneinander getrennt. Der Brennerkörper kann aus unterschiedlichen Werkstoffen bestehen, bevorzugt ist jedoch ein schlecht wärmeleitendes, elektrisch isolierendes Material.

Aus Figur 6 ist die Schraubbefestigung des Anschlußteils 22 am Brennerkörper 13 zu erkennen. Diese erfolgt mittels einer Inbusschraube 27, die gegen das Anschlußteil mittels der Isolierung 26 elektrisch isoliert ist. Es sind auch andere Verschraubungen möglich, wesentlich ist jedoch, daß die Schrauben jeweils elektrisch isoliert gegenüber dem Anschlußteil 22 sind.

Figur 7 zeigt eine Aufsicht aus Richtung Y auf das Anschlußteil 22 mit den drei Schrauben 27 und dem Anschluß 12 der Drahtführspirale. Der Luft/Schutzgasanschluß ist mit 16 bezeichnet und 14 und 15 sind die Kühlwasseranschlüsse.

Bezugszeichenliste

1   Gasdüse

2   Spritzerschutz

3   Stromdüse

3a  Stromdüsenaufnahme

4   Gasdüsenaufnahme

5   aufschraubbarer Spannring

6   Außenrohr

7   äußeres Profilrohr

8   Wasserkanäle, Nuten im äußeren Profilrohr

9   Isolierung

10  inneres Profilrohr, Brennerrohr

11  Luft-Gaskanäle, Nuten im inneren Profilrohr

12  Raum für Drahtführspirale

13  Brennerkörper

14  Kühlwasseranschluß

15  Kühlwasseraustritt

16  Gas-Luftanschluß

17  Gummidichtung, elektrisch isolierend

18  Rückschlagventil

19  Brenneranschluß

20  Schutzgasanschluß

21  Preßluftanschluß

22  Anschlußteil

23  Bohrung für Wasseranschluß

24  Bohrung für Wasseranschluß

25  Distanzstück, isolierende Buchse

26  Isolierung

27  Inbusschraube

Patentansprüche:

1. Schutzgasschweißbrenner für das Schweißen mit abschmelzender Elektrode, mit einer Gasdüse, einer am Ende des Außenrohres aufgesetzten Gasdüsenaufnahme, innerhalb eines dünnwandigen Außenrohres koaxial zueinander angeordneten stromführenden Brennerrohres und durch eine elektrisch isolierende Schicht voneinander getrennten inneren und äußeren Profilrohren mit längslaufenden Nuten, wobei am vorderen Ende des Brennerrohres eine Stromdüse und am anderen Ende ein Brennerkörper, an die sich das Schlauchpaket anschließt, angeordnet sind, wobei das äußere Profilrohr sich bis weit in die Gasdüsenaufnahme erstreckt und seine als Kühlwasserkanäle dienenden Längsnuten an ihren Enden in der Gasdüsenaufnahme durch eine Ringnut miteinander verbunden sind, die Nuten des inneren Profilrohres am vorderen Ende vor der Stromdüse offen enden und am anderen Ende innerhalb des Brennerkörpers in einem Ringraum münden, innerhalb des Brennerkörpers eine erste Bohrung vorhanden ist, die zwischen einer Gruppe der Kühlwasserkanäle und einem Kühlwasseranschluß eine Verbindung herstellt, eine zweite Bohrung vorhanden ist, die mit der anderen Gruppe von Wasserkanälen Verbindung zum Kühlwasseraustritt herstellt und eine dritte Bohrung einen Gas-Luftanschluß mit dem Ringraum am Ende der Nuten des inneren Profilrohres verbindet, d a d u r c h   g e k e n n z e i c h n e t , daß

a) an der Gasdüsenaufnahme (4) ein Spritzerschutz (2) innerhalb der Gasdüse (1) angeordnet ist, in dessen Bereich die längslaufenden Nuten (11) des inneren Profilrohres (10) so enden, daß Gas radial aus den Nuten austritt und an die Innenwand der Gasdüse (1) mit dem Spritzerschutz (2) gelangt,

b) in der Nähe des Gas-Luftanschlusses (16) des Brennerkörpers (13) eine Verzweigung für einen Preßluftanschluß vorhanden und in der Schutzgasleitung ein selbsttätig wirkendes Rückschlagventil (18) vorhanden ist.

2. Schutzgasschweißbrenner für das Schweißen mit abschmelzender Elektrode, mit einer Gasdüse, einer am Ende des Außenrohres aufgesetzten Gasdüsenaufnahme, innerhalb eines dünnwandigen Außenrohres koaxial zueinander angeordneten stromführenden Brennerrohres und durch eine elektrisch isolierende Schicht voneinander getrennten inneren und äußeren Profilrohren mit längs laufenden Nuten, wobei am vorderen Ende des Brennerrohres eine Stromdüse und am anderen Ende ein Brennerkörper, an die sich das Schlauchpaket anschließt, angeordnet sind, wobei das äußere Profilrohr sich bis weit in die Gasdüsenaufnahme erstreckt und seine als Kühlwasserkanäle dienenden Längsnuten an ihren Enden in der Gasdüsenaufnahme durch eine Ringnut miteinander verbunden sind, die Nuten des inneren Profilrohres am vorderen Ende vor der Stromdüse offen enden und am anderen Ende innerhalb des Brennerkörpers in einem Ringraum münden, innerhalb des Brennerkörpers eine erste Bohrung vorhanden ist, die zwischen einer Gruppe der Kühlwasserkanäle und einem Kühlwasseranschluß eine Verbindung herstellt, eine zweite Bohrung vorhanden ist, die mit der anderen Gruppe von Wasserkanälen Verbindung zum Kühlwasseraustritt herstellt und eine dritte Bohrung einen Gas-Luftanschluß mit dem Ringraum am Ende der Nuten des inneren Profilrohres verbindet, d a d u r c h   g e k e n n z e i c h n e t ,  daß die außen auf die Gasdüsenaufnahme (4) aufgesetzte Gasdüse (1) durch einen aufschraubbaren Spannring (5) gesichert wird.

3. Schutzgasschweißbrenner nach Anspruch 1 oder 2, d a d u r c h   g e k e n n z e i c h n e t ,  daß der Brennerkörper (13) von dem daran mittels Schrauben (27) befestigten Anschlußteil (22) durch die Dichtung (17) elektrisch isoliert ist und zwischen dem Anfang der Bohrungen (23, 24) im Brennerkörper (13) und den Wasseranschlußstutzen (14, 15) am Anschlußteil (22) elektrisch isolierende hohlzylindrische Distanzstücke (25) angeordnet sind.

Fig. 1

Fig 4

0074106

Fig.2

Fig.3
Schnitt C-D

Fig.5
Schnitt A-B

Fig.6
Ansicht von „X"

Fig.7
Ansicht von „Y"

# EUROPÄISCHER RECHERCHENBERICHT

**Europäisches Patentamt**

**0074106**
Nummer der Anmeldung

EP 82 10 8195

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. 3) |
|---|---|---|---|
| | --- | | B 23 K 9/28 |
| A | DE-B-2 416 545 (BRONNHUBER) <br> * Abbildungen 1,3 * | 1 | |
| | --- | | |
| A | DE-A-2 210 692 (DAIMLER-BENZ) <br> * Abbildungen * | 2 | |
| | --- | | |
| A | CH-A- 337 967 (WESTINGHOUSE) | | |
| | --- | | |
| A | CH-A- 345 703 (UNION CARBIDE) <br> * Abbildung 3 * | 1 | |
| | --- | | |
| A | EP-A-0 041 165 (BINZEL) | | |
| | --- | | **RECHERCHIERTE SACHGEBIETE (Int. Cl. 3)** |
| A | GB-A-1 347 527 (CO-ORDINATED INDUSTRIES) | | B 23 K |
| | ----- | | |

Der vorliegende Recherchenbericht wurde für alle Patentansprüche erstellt.

| Recherchenort <br> DEN HAAG | Abschlußdatum der Recherche <br> 15-12-1982 | Prüfer <br> HOORNAERT W. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82